# EUROPEAN PATENT APPLICATION

(11) **EP 1 622 087 A1**
(43) Date of publication of application: **01.02.2006**
(21) Application number: 04291944.9
(22) Date of filing: 29.07.2004
(51) Int. Cl.: G06T 17/50, G06T 1/00

(54) **Automatic digital cartographic image production**

(71) Applicant: Imagerie stereo appliquee au relief S.A., 06905 Valbonne Sophia Antipolis (FR)
(72) Inventor: Fontaine, Marc, 06905 Sophia Antipolis (FR)
(74) Representative: Ulrich, Thomas

(57) **Abstract**

The invention refers to the production of digital cartographic images by means of an automatic digital image data processing chain (DIP) and a user interface (UI). Aan automatic piloting chain (AP) interfaces the image data processing chain, the piloting chain comprising an image data processing workflow (IDPW) and being triggered by image data processing states (T1, T2, T3) of the image data processing chain (DIP), the processing workflow (IDPW) automatically piloting the image data processing chain (DIP) depending on the image data processing states (T1, T2, T3).

## Description

The invention relates to a method for producing digital cartographic images by means of a digital cartographic image production system, to a digital cartographic image production system and to a data carrier containing data or signal sequence representing data where the data contain a digital cartographic image production program. Different methods and systems for the production of digital cartographic images are already known from the state of the art.

US 6,470,265 refers to a digital map data processing device and a digital map data processing method which are useful to generate an accurate road map and particularly can be used for navigation and control of traveling vehicles according to the generated road map. A map image processing station acquires aerial or satellite image data of the ground surface through a satellite communication station, and an image processing section converts the image data into orthoimage data which is viewed substantially from directly above and free from distortion. For this, satellite images of one and the same area taken from a plurality of angles are processed such as to convert the ground surface into a state viewed substantially from directly above. For this, the image processing section can produce stereoscopic photographs of the same point from at least two directions. A data extraction section extracts a skeleton map (road network data) formed of roads and related stereoscopic information according to the orthoimage data, a data conversion section calculates base road data from the skeleton map, and a map generation section overlays necessary attribute data to generate highly accurate digital orthomap data free from a distortion. The digital orthomap data can then be sent to a vehicle through a transmission section and used for navigation control and running control.

EP 0 634 628 describes a method for earth observation by evaluation of areal images. An areal image is converted into digitalised form and an orthographic representation (orthoimage) is generated from the digitalised form. A height model is ascertained and digitalised and the orthographic image is computed by means of the digitalised height model. I.e. deviations from the orthogonal projection are compensated using a pre-measured height model of the landscape in a vector calculator. In the orthoimage, areas e.g. agriculturally usable areas, are then selected and boundary lines are defined and the surface is computed for those selected areas. For this method, no stereoimages are used or required. The areal images are taken along a predefined flight path and position and attitude of the plane are continuously controlled along the flight path. As an alternative, satellite images can be used. In addition to usual colour photos, colour infrared photos can be used for this method. From all aerial images, one overall orthoimage is computed in the process. A vectorisation of selected areas in the orthoimage is effected by means of a subsequent semi-automatic vectorisation program.

FR 2 777 376 discloses a method of producing cartographic data for an urban zone. The method has the following stages: - a plane or satellite takes photographs of the urban zone at each ground point, which may be masked, seen from at least three image view points, each time under an average incidence angle with respect to the vertical which does not exceed 20 degrees; - form a pair of images corresponding to the aimed directions having angular shifts between 15 to 25 degrees. The pairs are needed to form bases in at least two different orientations; - model the geometry of the views; - form disparity cards corresponding each corresponding to a pair, by inter-correlation. Deduce the MNE(Mean Numerical Elevation) in the form of elevation (z) for each point of (x,y) coordinates; - combine the MNE by retaining for every elevation point corresponding to the best group of surrounding height measurements, and; - deduce an orthoimage. The orthoimage can be used for a further, manual process effected by an operator, in order to achieve a corrected and simplified representation. The final product is in the form of a corrected numeric model or vector representation of the ground surface.

A major drawback of all of the methods and systems known from the state of the art is the lack of flexibility and the high need for human interaction in the process of producing digital cartographic images which requires highly skilled operator personal.

It is therefore an object of the invention to provide a simplified possibility for producing digital cartographic images. The invention according to claims 1, 4 and 7 relates to:
A method for producing digital cartographic images by means of a digital cartographic image production system, comprising:
   running an automatic digital image data processing chain and
   running a user interface,
   running an automatic piloting chain interfacing the image data processing chain, the piloting chain comprising an image data processing workflow and being triggered by image data processing states of the image data processing chain, the processing workflow automatically piloting the image data processing chain depending on the image data processing states;
a digital cartographic image production system, comprising:
   an automatic digital image data processing chain and,
   a user interface,
   the cartographic image production system further comprising an automatic piloting chain interfacing the image data processing chain and comprising an image data processing workflow, the piloting chain being triggered by image data processing states of the image data processing chain, the processing workflow automatically piloting the image data processing chain depending on the image data processing states
and
a data carrier containing data or signal sequence representing data where the data contain a digital cartographic image production program, the image production program comprising:
   a digital image data processing routine and
   a user interface routine,
   the image production program further comprising:
      a piloting routine interfacing the image data processing routine and comprising an image data processing workflow, the piloting module being triggered by image data processing states of the image data processing routine, the processing workflow automatically piloting the image data processing routine depending on the image data processing states.

The solution provided by the invention as set out above follows a common concept: a modular layout, chosen in a very specific manner such that an optimisation of the digital cartographic image production and the need for human interaction can be minimized. It is this very specific layout that provides the desired advantage over the state of the art. In particular, the provision of an automatic piloting chain/module which interfaces with a separate digital image processing chain/module allows, on the one hand, to optimise those chains/modules independently, and on the other hand provides a workflow framework around the digital image processing chain/module which allows an automated steering and control of the digital image processing chain/module, being modularly independent of the digital image processing chain/module and the respective image processing algorithms. A user of the invention does no longer have to know detailed knowledge about the separate image processing steps, as the processing workflow takes over the task of initiating, surveying and/or controlling the digital image processing chain/module and the results of the different processing steps. Thus, the processing workflow takes over the task of the image production management. The user interface may provide only very simplified graphical display functions, and may even be set up without any possibility to interact with, control or change the individual processing steps sub-modules or subroutines of the digital image processing chain/module. The invention rather comprises a data-driven workflow, where individual tasks are triggered by data processing states and the processing workflow is piloting the digital cartographic image production through respective command data depending on the data processing states.

The processing workflow can be adapted to provide a dynamic workflow management: The production process steps are described as a dynamic workflow routine in a database from which the automatic piloting chain can run the image data processing/digital cartographic image production, and data output routines can be included into the dynamic workflow routine adapted to provide graphical output to users about the current status of the digital cartographic image production. Workflow means that the workflow routine comprises a description of the image production flow in terms of activities. An activity is an elementary process or process step taking data as inputs and producing data as outputs. The activities are triggered through the processing workflow based on data processing states.

The method and image production system according to the invention can be effected by means of hardware components adapted to fulfil the defined tasks, like specific electronic devices or integrated circuits. Alternatively, the method and image production system can rely on a software solution, where all or at least a major part of the defined tasks is effected by software programs and/or software program routines adapted to run on a data treating apparatus, like on a computer.

In one embodiment of the method according to the invention, the digital image data processing chain comprises the steps of:
automatic reading input image data of various image sources,
automatic outputting various digital cartographic image formats,
automatic processing of the input data of various digital image sources and automatic creation of the various digital cartographic image formats by means of a unique image processing path.

All of these steps are piloted by the processing workflow as mentioned above.

In particular, the image processing path can comprise the steps of:
automatic pre-processing of input image data,
automatic processing of digital image data,
automatic post-processing of digital image data and
automatic quality control of digital image data.

So the digital image data processing as well as the image processing path are provided in modular form. The processing workflow is set up corresponding to this modular structure, containing trigger points where the running each of those modules can be triggered.

In a specific embodiment of the digital cartographic image production system according to the invention, the digital image data processing chain comprises:
an interface sub-module adapted for input image data of various image sources,
an output sub-module adapted for outputting various digital cartographic image formats and
a unique image processing path used for processing the input data of various digital image sources and for creating the various digital cartographic image formats.

In particular, the image processing path of the digital cartographic image production system can comprise:
a pre-processing sub-module,
a processing sub-module,
a post-processing sub-module and
a quality control sub-module,
each adapted for the respective processing of digital image data.

Here again, the digital image data processing as well as the image processing path are provided in modular form. Again, the processing workflow is set up corresponding to this modular structure, containing trigger points where the running each of those modules can be triggered.

In a specific embodiment of the data carrier or signal sequence according to the invention, the image data processing routine of the image production software program comprises:
an interface subroutine adapted for input image data of various image sources,
an output subroutine adapted for outputting various digital cartographic image formats and
a unique image processing subroutine used for processing the input data of various digital image sources and for creating the various digital cartographic image formats.

In particular, the image processing subroutine can comprise:
a pre-processing subroutine,
a processing subroutine,
a post-processing subroutine and
a quality control subroutine,
each adapted for the respective processing of digital image data.

Also for this embodiment of the invention, the digital image data processing as well as the image processing path are provided in modular form, i.e. in form of routines and subroutines provided in modular form. Again, the processing workflow is set up corresponding to this modular structure, containing trigger points where the running each of those modules can be triggered.

One further common aspect of the specific embodiments described above is that a unique image processing path/subroutine is used, containing an interface to input image data of various image sources and adapted to create various digital cartographic image formats. The image processing path/subroutine can be based on a parallel computing capability. Basically, the image processing path/subroutine can comprise state of the art image processing steps or algorithms like the ones mentioned above.

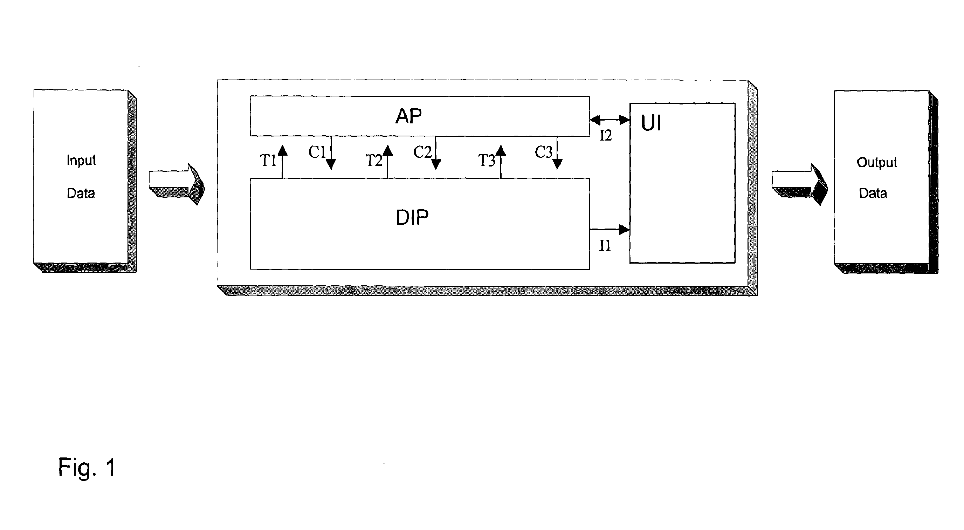

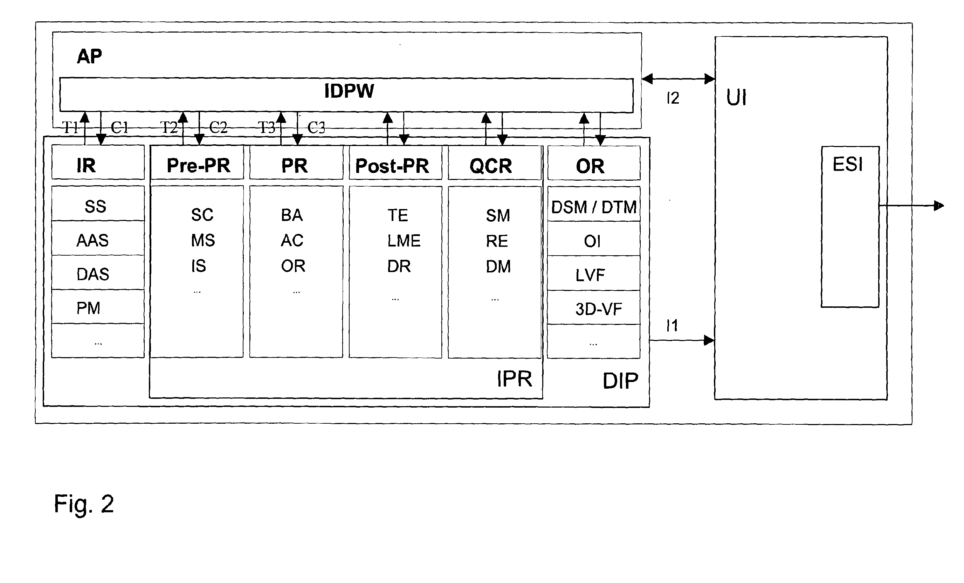

One specific example of the invention is described below with reference to fig. 1 and 2, the example referring to a software based embodiment of the invention.
- Fig. 1:: Schematic illustration of the overall digital cartographic image production program
- Fig. 2:: Detailed illustration of the modular structure of the program according to fig. 1

In Fig. 1, the overall layout of a digital cartographic image production software program according to the invention is described. Input image data is fed into the image production software program which comprises three main routines:
a digital image data processing routine DIP,
a piloting routine AP and
a user interface routine UI.

The piloting routine AP interfaces the digital image data processing routine DIP and is triggered by image data processing states T1, T2, T3. Based on these trigger states, the piloting routine AP produces command data C1, C2, C3 which are transmitted to the digital image data processing routine DIP for piloting purposes. The digital image data processing routine DIP produces digital cartographic image data of various formats which are transmitted via a one-way data interface 11 to the user interface routine Ul. This means that via this data interface 11, no backward interaction from the user interface routine UI to the digital image data processing routine DIP is possible, i.e. a user cannot directly access the digital image data processing routine DIP through the user interface routine UI. A further data interface I2 is provided in form of a one-way or two-way data interface between the piloting routine AP and the user interface routine UI. This data interface I2 can either be defined like the interface I1, i.e. that data can be transferred from the piloting routine AP to the user interface Ul but no backward interaction is possible. Or the data interface I2 allows also certain interaction from the user interface UI to the piloting routine AP, such that certain default settings of the processing workflow IDPW can be modified or subsets of image data can be selected on which the processes piloted by the processing workflow IDPW are to be carried out. The user interface routine UI can comprise an external system interface ESI to existing standard software or hardware systems like Unix, Windows etc.

As depicted in fig. 2, the image production program does not only show a modular structure, but rather a hierarchical modular layout, i.e. top level routines again being formed of modular sub-routines etc. The piloting routine AP comprises an image data processing workflow routine IPDW that interfaces the digital image data processing routine DIP. This digital image data processing routine DIP comprises an input interface subroutine IR adapted for input image data of various image sources, an output subroutine OR adapted for outputting various digital cartographic image formats and a unique image processing subroutine IPR used for processing the input data of various digital image sources and for creating the various digital cartographic image formats. The image processing subroutine IPR comprises a pre-processing subroutine Pre-PR, a processing subroutine PR, a post-processing subroutine Post-PR and a quality control subroutine QCR.

The input interface subroutine IR is adapted for input data of satellite sensors SS, analogue aerial sensors AAS, digital aerial sensors DAS, paper maps PM etc.
The pre-processing subroutine Pre-PR comprises the steps of sensor calibration SC of the input image data sensors, map scanning MS, image scanning IS etc.
The processing subroutine PR comprises the steps of bundle adjustment BA of a bundle of input images form one or more image sensors, automatic correlation AC and ortho-rectification OR of the input image data. It can further comprise steps of parallel image computation like parallel DSM computation, parallel true-ortho computation, parallel G-DSM computation, parallel ground ortho computation etc. The post-processing subroutine Post-PR comprises the steps of terrain edition TE, land-use map edition LME, data reformatting DR in order to provide the desired data formats etc.
The quality control subroutine QCR comprises the steps of statistical measurement SM, report or check list edition RE, data mining DM. It can further comprise the steps of geometry validation and data processing report generation, e.g. in html-format.

The output subroutine OR provides digital cartographic images in the format of DSM/DTM, orthoimage OI, linear vector file LVF, 3d vector file 3D-VF etc. These digital cartographic images are transmitted to the user interface routine UI via the one-way data interface 11.

Each of the subroutines of the image processing subroutine IPR/ digital image data processing routine DIP receives data from the preceding subroutine and provides processed data to the subsequent subroutine, the process steps being triggered by image data processing states T1, T2, T3 and piloted by the piloting routine AP through command data C1, C2, C3. The piloting routine AP preferably also takes over the tasks of
- Archiving: this task aims to save and archive data handled at the time of the production. All the requests and executions are recorded in a database, as well as the metadata related to the archived data.
- Error Management: this task allows recording of any error occurring during the production and helps the system to automatically recover from those errors.
- Management and optimisation of the resources: this task is responsible of the hardware management. It optimises all hardware resources: distribution of the computation, availability of data storage space, availability of the data processing hardware.
- Reporting: This task allows or at least initiates production report generation based on the current projects handled by the system.

## Claims

1. Method for producing digital cartographic images by means of a digital cartographic image production system, comprising:
running an automatic digital image data processing chain (DIP) and running a user interface (UI),
**characterized in**
running an automatic piloting chain (AP) interfacing the image data processing chain, the piloting chain comprising an image data processing workflow (IDPW) and being triggered by image data processing states (T1, T2, T3) of the image data processing chain (DIP), the processing workflow (IDPW) automatically piloting the image data processing chain (DIP) depending on the image data processing states (T1, T2, T3).

2. Method according to claim 1, **characterized in that** the digital image data processing chain (DIP) comprises the steps of:
automatic reading input image data of various image sources,
automatic outputting various digital cartographic image formats,
automatic processing of the input data of various digital image sources and automatic creation of the various digital cartographic image formats by means of a unique image processing path (IPR).

3. Method according to claim 2, **characterized in that** the image processing path (IPR) comprises the steps of:
automatic pre-processing (Pre-PR) of input image data,
automatic processing (PR) of digital image data,
automatic post-processing (Post-PR) of digital image data and
automatic quality control (QCR) of digital image data.

4. Digital cartographic image production system, comprising:
an automatic digital image data processing chain (DIP) and
a user interface (UI),
**characterized in that** the cartographic image production system further comprises an automatic piloting chain (AP) interfacing the image data processing chain (DIP) and comprising an image data processing workflow (IDPW), the piloting chain (AP) being triggered by image data processing states (T1, T2, T3) of the image data processing chain (DIP), the processing workflow (IDPW) automatically piloting the image data processing chain (DIP) depending on the image data processing states (T1, T2, T3).

5. Digital cartographic image production system according to claim 4, **characterized in that** the digital image data processing chain (DIP) comprises:
an interface sub-module (IR) adapted for input image data of various image sources,
an output sub-module (OR) adapted for outputting various digital cartographic image formats and
a unique image processing path (IPR) used for processing the input data of various digital image sources and for creating the various digital cartographic image formats.

6. Digital cartographic image production system according to claim 5, **characterized in that** the image processing path (IPR) comprises:
a pre-processing sub-module (Pre-PR),
a processing sub-module (PR),
a post-processing sub-module (Post-PR) and
a quality control sub-module (QCR),
each adapted for the respective processing of digital image data.

7. Data carrier containing data or signal sequence representing data where the data contain a digital cartographic image production program, the image production program comprising:
a digital image data processing routine (DIP) and
a user interface routine (UI),
**characterized in that** the image production program further comprises:
a piloting routine (AP) interfacing the image data processing routine (DIP) and comprising an image data processing workflow (IPDW), the piloting routine (AP) being triggered by image data processing states (T1, T2, T3) of the image data processing routine (DIP), the processing workflow (IDPW) automatically piloting the image data processing routine (DIP) depending on the image data processing states (T1, T2, T3).

8. Data carrier or signal sequence according to claim 7, **characterized in that** the image data processing routine comprises:
an interface subroutine (IR) adapted for input image data of various image sources,
an output subroutine (OR) adapted for outputting various digital cartographic image formats and
a unique image processing subroutine (IPR) used for processing the input data of various digital image sources and for creating the various digital cartographic image formats.

9. Data carrier or signal sequence according to claim 8, **characterized in that** the image processing subroutine (IPR) comprises:
a pre-processing subroutine (Pre-PR),
a processing subroutine (PR),
a post-processing subroutine (Post-PR) and
a quality control subroutine (QCR).
